# EUROPÄISCHE PATENTANMELDUNG

(11) **EP 0 800 255 A2**
(43) Veröffentlichungstag der Anmeldung: **08.10.1997**
(21) Anmeldenummer: 97105482.0
(22) Anmeldetag: 02.04.1997
(51) Int. Cl.: H02K 1/00

(54) **Spulenkörper für die Ständerwicklung eines Elektrokleinmotors und mit diesem hergestellter Elektrokleinmotor**

(30) Priorität: 02.04.1996 DE 19613127
(71) Anmelder: Alcatel SEL Aktiengesellschaft, D-70435 Stuttgart (DE)
(72) Erfinder: Glasauer, Rudolf, 84166 Adlkofen (DE); Lutz, Josef, 84034 Landshut (DE)
(74) Vertreter: Pohl, Herbert, Dipl.-Ing.

(57) **Zusammenfassung**

Die Erfindung betrifft einen Spulenkörper für die Ständerwicklung eines Elektrokleinmotors in feuchtigkeitsgeschützter Ausführung, bei dem die elektrischen Anschlüsse an die Ständerwicklung durch isolierte Litzendrähte erfolgt, und einen mit einem solchen Spulenköper hergestellten Elektrokleinmotor.

An einer Seitenkante des Seitenteils des Spulenkörpers sind geschlitzte Kunststoffhülsen einstückig angespritzt. Beim Umspritzen der Ständerwicklung liegen die Enden der isolierten Litzendrähte geschützt in den Kunststoffhülsen.

## Beschreibung

Die Erfindung betrifft einen Spulenkörper für die Ständerwicklung eines Elektrokleinmotors in feuchtigkeitsgeschützter Ausführung, bei dem die elektrischen Anschlüsse an die Ständerwicklung durch isolierte Litzendrähte erfolgt und einen mit einem solchen Spulenkörper hergestellten Elektrokleinmotor.

Bei einem Elektrokleinmotor kann es sich beispielsweise um einen Spaltpol-Asynchronmotor handeln, wie er aus dem Katalog: "Kleinmotoren" der Anmelderin und aus der DE-A-33 46 094 bekannt ist. Die abgegebene Nennleistung bei derartigen Kleinmotoren liegt zwischen einem Bruchteil von einem Watt und einigen Watt. Wenn diese Kleinmotoren in Geräten eingesetzt werden, welche in einer Feuchtraum-Atmosphäre verwendet werden, wie zum Antrieb von Laugenpumpen und Kondensatpumpen oder in Kühlgeräten, dann ist es erforderlich, die Ständerwicklungen zur Erhöhung des Isolierwiderstandes in eine Kunststoffhülle einzuspritzen. Um die Kleinmotoren einfach im Gerät anschließen zu können, werden als Anschlußleitungen mit der Ständerwicklungen isolierte Litzendrähte verwendet.

Nun ist es aber technisch schwierig, Litzendrähte zu umspritzen. Aus diesem Grund besitzen die bekannten Kleinmotoren Steckanschlüsse, an welche die mit entsprechenden Steckern versehene Litzendrähte angesteckt werden. Das bringt einerseits den Nachteil mit sich, daß für den Steckkontakt zusätzlich - meist unzureichende - Isoliermaßnahmen vorgesehen werden müssen, welche einen zusätzlichen apparativen und Montage-Aufwand erfordern.

Das der Erfindung zugrundeliegende technische Problem besteht nun darin, einen Spulenkörper für einen Kleinmotor zu schaffen, bei dem die Litzendrähte mit der Ständerwicklung verbunden und beim Umspritzen der Ständerwicklung mit umspritzt werden können.

Dieses technische Problem ist erfindungsgemäß durch folgende Merkmale gelöst.
a) auf der Außenseite wenigstens eines Seitenteils sind Nocken angeordnet,
b) auf der Innenfläche des für die Aufnahme eines Eisenkerns vorgesehenen Rohrstücks sind Stege angeordnet,
c) an einer Seitenkante des Seitenteils sind Kunststoffhülsen angeformt.

Bei der Verwendung des erfindungsgemäßen Spulenkörpers können die Enden der Litzendrähte vor dem Umspritzen der Ständerwicklung mit den Verbindungsstücken verbunden werden, bespielsweise an diesen angelötet werden, und die Litzenenden beim Umspritzen der Ständerwicklung gleichzeitig mit umspritzt werden, ohne daß die Gefahr einer Beschädigung der Isolation an den isolierten Litzendrähten besteht. Die Kunststoffhülsen schützen die isolierten Litzendrähte beim Umspritzen der Ständerwicklung vor Beschädigung.

Vorteilhafte Einzelheiten der Erfindung sind in den Ansprüchen 2 bis 5 enthalten; sie ist nachstehend anhand der Figuren 1 bis 3 erläutert. Es zeigen.
- Fig. 1: einen bewickelten erfindungsgemäßen Spulenkörper vor dem Umspritzen
- Fig. 2: die fertig umspritzte Ständerwicklung.
- Fig. 3: eine andere Ausführungsform des bewickelten Spulenkörpers.

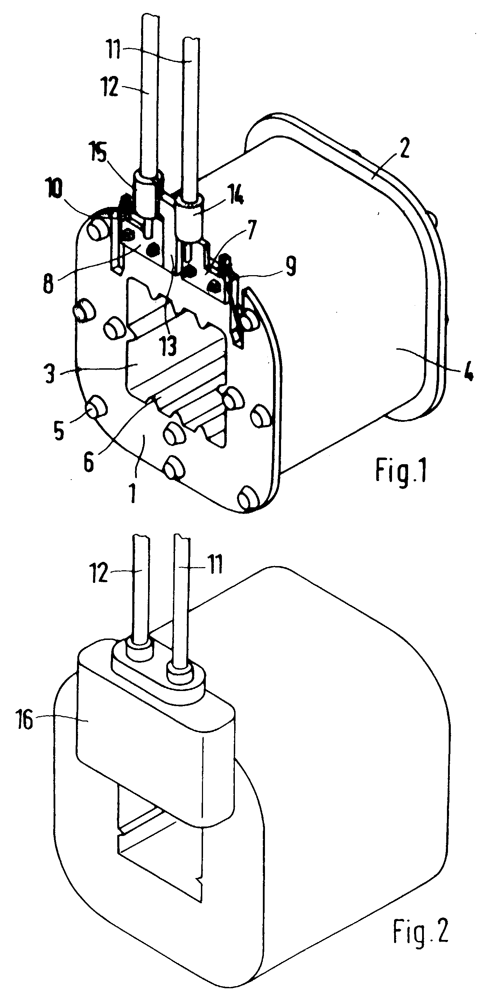

Wie aus Fig. 1 zu erkennen ist, besteht der Spulenkörper in an sich bekannter Weise aus den beiden Seitenteilen 1 und 2 sowie dem diese verbindenden quadratischen Rohrstück 3. Derartige Spulenkörper sind in der Regel einstückig aus Kunststoff gespritzt. Bei dem in Fig. 1 gezeigten Ausführungsbeispiel ist der Spulenkörper bereits mit der Wicklung 4 versehen.

Wie aus Fig. 1 weiter zu erkennen ist, ist die Außenseite der Seitenteile 1 und 2 mit einer Mehrzahl von Nocken 5 versehen. Auf der Innenfläche des Rohstücks 3 sind Stege 6 angeordnet. Die Nocken 5 und Stege 6 gewährleisten beim Umspritzen des Spulenkörpers den erforderlichen Isolationsabstand. Bei dem in Fig. 1 gezeigten Ausführungsbeispiel sind die mit einem Längsschlitz versehenen Kunststoffhülsen 14 und 15 mit den Enden des Querbalkens eines T-förmigen Trägers 13 verbunden, welcher an einem Seitenteil 1 angeformt ist. Die Enden der isolierten Litzendrähte 11 ud 12 sind von den Kunststoffhülsen 14 und 15 umfaßt. Beim Umspritzen des Spulenkörpers mit den Anschlüssen werden die Enden der isolierten Litzendrähte 11 und 12 von den geschlitzten Kunststoffhülsen 14 und 15 festgeklemmt, dabei zugentlastet und vor Beschädigung geschützt. Am Seitenteil 1 des Spulenkörpers sind auch die Verbindungsstücke 7 und 8 vorhanden. Mit diesen sind einerseits die Enden der Wicklung 9 und 10 und andererseits die Litzendrähte 11 und 12 elektrisch leitend verbunden, welches beispielsweise durch Löten erfolgt.

Fig. 2 zeigt die fertige Ständerwicklung eines Kleinmotors, wie sie unter Verwendung der in Fig. 1 gezeigten Anordnung durch Umspritzen mit Kunststoff entstanden ist. Die Wicklung 4 ist vollständig von einer Kunststoffhülle umgeben und der Kontaktbereich des Spulenkörpers, welcher u. a. die Befestigungsstücke 7, 8, die Kunststoffhülsen 14, 15 und die Enden der Litzendrähte 11 und 12 enthält, ist von einer Kunststoffhülle 16 umgeben.

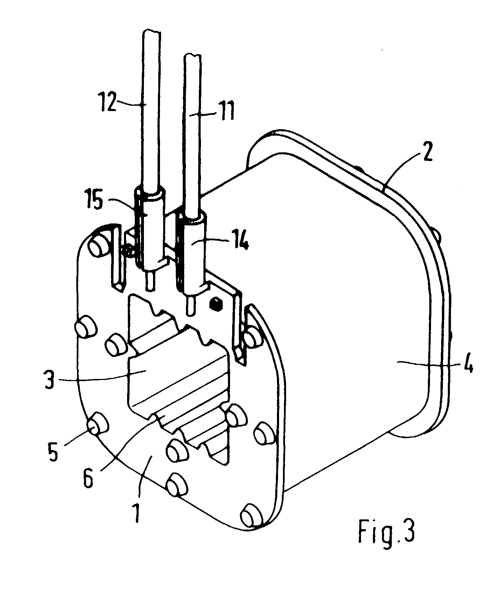

Der in Fig. 3 gezeigte Spulenkörper entspricht im wesentlichen dem in Fig. 1 gezeigten Spulenkörper. Deshalb sind die in beiden Figuren übereinstimmenden Teile mit den gleichen Bezugszeichen versehen. Der Unterschied zwischen den Spulenkörpern besteht darin, daß bei dem Spulenkörper gemäß Fig. 3 die Kunststoffhülsen 14 und 15 unmittelbar an der Seitenkante des Seitenteils 1 angeformt, beispielsweise angespritzt sind.

## Patentansprüche

1. Spulenkörper für die Ständerwicklung eines Elektrokleinmotors in feuchtigkeitsgeschützter Ausführung, bei dem die elektrischen Anschlüsse an die Ständerwicklung durch isolierte Litzendrähte verwirklicht sind,
**gekennzeichnet durch** folgende Merkmale:
a) auf der Außenseite wenigstens eines Seitenteils (1, 2) sind Nocken (5) angeordnet,
b) auf der Innenfläche des für die Aufnahme eines Eisenkerns vorgesehenen Rohrstücks (3) sind Stege (6) angeordnet,
c) an einer Seitenkante des Seitenteils (1) sind Kunststoffhülsen (14, 15) angeformt.

2. Spulenkörper nach Anspruch 1,
dadurch gekennzeichnet, daß die Kunststoffhülsen (14, 15) mit einem Längsschlitz versehen sind.

3. Spulenkörper nach den Ansprüchen 1 und 2,
dadurch gekennzeichnet, daß die Kunststoffhülsen (14, 15) an den Enden des Querbalkens eines T-förmigen Träger (13) angeordnet sind, welcher mit einer Kante des Seitenteils (1) des Spulenkörpers verbunden ist.

4. Spulenkörper nach Anspruch 3,
dadurch gekennzeichnet, daß die Kunststoffhülsen (14, 15) bzw. der T-förmige Träger (13) mit den Kunststoffhülsen (14, 15) einstückig mit dem Spulenkörper gespritzt sind.

5. Elektrokleinmotor mit einer auf einem Spulenkörper gemäß den Ansprüchen 1 bis 4 angeordneten Ständerwicklung,
dadurch gekennzeichnet, daß die elektrischen Anschlüsse der Ständerwicklung (4) aus mit den Verbindungsstücken (7, 8) verbundenen isolierten Litzendrähten (11, 12) bestehen, deren den Verbindungsstücken nahen Enden in den Kunststoffhülsen (14, 15) angeordnet sind, und der Spulenkörper vollständig mit einem Isolierstoff umspritzt ist.
